Europäisches Patentamt

European Patent Office

Office européen des brevets

(19)

(11) Publication number:  0 190 638
A1

(12) **EUROPEAN PATENT APPLICATION**

(21) Application number: 86101059.3

(22) Date of filing: 27.01.86

(51) Int. Cl.⁴: G 21 F 9/16

(30) Priority: 01.02.85 JP 18368/85

(43) Date of publication of application:
13.08.86 Bulletin 86/33

(84) Designated Contracting States:
DE FR GB SE

(71) Applicant: HITACHI, LTD.
6, Kanda Surugadai 4-chome Chiyoda-ku
Tokyo 100(JP)

(72) Inventor: Tsuchiya, Hiroyuki
2-14-18, Minamikouya-cho
Hitachi-shi Ibaraki-ken(JP)

(72) Inventor: Kikuchi, Makoto
2-1-1, Mikanohara-cho
Hitachi-shi Ibaraki-ken(JP)

(72) Inventor: Tamata, Shin
2-3-1, Takasuzu-cho
Hitachi-shi Ibaraki-ken(JP)

(72) Inventor: Mizuno, Hiroko
1-3-10-302, Nishinarusawa-cho
Hitachi-shi Ibaraki-ken(JP)

(74) Representative: Patentanwälte Beetz sen. - Beetz jun.
Timpe - Siegfried - Schmitt-Fumian
Steinsdorfstrasse 10
D-8000 München 22(DE)

(54) Method for solidifying liquid wastes.

(57) Disclosed is a method for stabilizing a difficultly combustible organic liquid waste (1) such as a silicone oil or an organic solvent, especially one contaminated with a radioactive substance. According to this method, this organic liquid waste (1) is adsorbed in a porous inorganic substance (2) such as a zeolite and the porous inorganic substance (3) is solidified with an inorganic solidifying agent such as a cement glass composed mainly of sodium silicate.

FIG. 2

EP 0 190 638 A1

0190638

Title of the Invention

METHOD FOR SOLIDIFYING LIQUID WASTES

Background of the Invention

(1) Field of the Invention

The present invention relates to a method for stably solidifying organic liquid wastes such as silicone oils and organic solvents, especially a difficultly combustible organic liquid waste contaminated with a radioactive substance.

(2) Description of the Prior art

As the main liquid waste discharged from a nuclear power plant, there are known a waste liquid formed at the regeneration by an iron-exchange resin used for a desalting apparatus arranged in the purifying system and an organic waste liquid. As the organic waste liquid, there can be mentioned a drain oil of a rotating device such as a pump and an organic solvent discharged from the step of the chemical analysis. These wastes are divided into combustible wastes and difficultly combustible wastes.

The regeneration waste liquid is treated according to known methods, for example, a method in which the waste liquid is dried and powdered by a drier and the powder is pelletized and solidified by a granulator (see Japanese Patent Publication No. 55-34397), and the combustible waste is subjected to an incineration treatment. However, an approproate treatment method for the difficultly combustible waste has not been established.

For example, in the case where a difficultly combustible organic waste such as a silicone oil is solidified, since the oil component cannot be separated from added water, a stable solidified body cannot be formed. Furthermore, when this waste is solidified with an organic material such as plastics or asphalt, since the organic solidifying agent is mixed and diluted with the organic waste and no satisfactory solidifying effect can be attained, a stable solidified body cannot be formed. Moreover, this method is defective in that the radioactivity is diffused entirely in the solidified body. Accordingly, at the present, the organic waste is charged in a vessel and stored in this state. In this case, however, there is a risk of leakage of the waste by corrosion or breakage of the vessel. Therefore, it is an important how to solidify a waste of this type stably.

## Summary of the Invention

It is a primary object of the present invention to provide a method for stably solidifying liquid wastes.

Another object of the present invention is to provide a process for stably solidifying difficultly combustible organic liquid wastes such as silicone oils and organic solvents.

Still another object of the present invention is to provide a method for stably solidifying organic liquid wastes contaminated with radioactive substances.

Yet another object of the present invention is to stably solidify liquid wastes readily.

In accordance with the present invention, these objects can be attained by a method in which a liquid waste is adsorbed in a porous substance and the porous substance is solidified with a solidifying agent.

Other features, objects and advantages will become apparent from the following description made with reference to the accompanying drawings.

Brief Description of the Drawings

Fig. 1 is a block diagram illustrating the outline of the present invention.

Fig. 2 is a systematic diagram illustrating an apparatus for making an organic liquid waste adsorbed in an adsorbent.

Fig. 3 is a systematic diagram illustrating an apparatus for solidifying an adsorbent with an inorganic solidifying agent.

Fig. 4 is a diagram illustrating the results of the measurement of the compression strengths of solidified bodies obtained at various water/cement glass ratios.

Detailed Description of the Preferred Embodiments

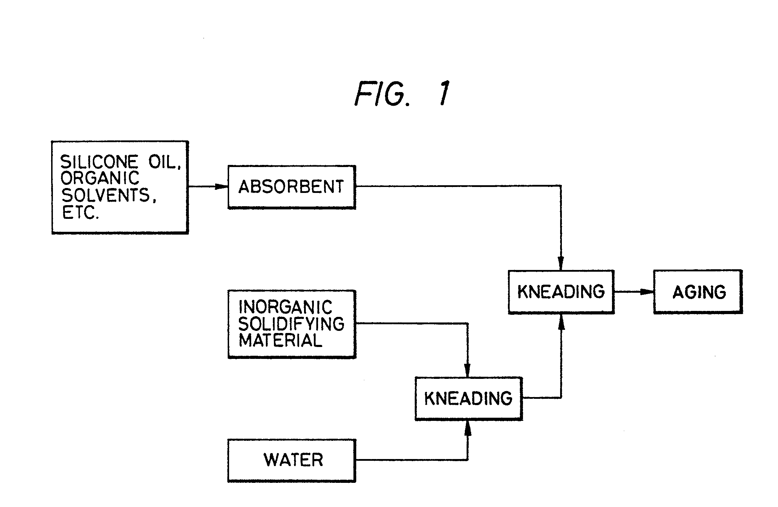

One embodiment of the present invention will now be described with reference to Fig. 1. Radioactive organic liquids discharged from a nuclear power plant, such as silicone oils and organic solvents, are adsorbed in an adsorbent composed of a porous inorganic substance. Then, a mixture formed by kneading an inorganic solidifying agent with water is mixed with the adsorbent containing the organic liquid adsorbed therein, and the mixture is aged at a predetermined temperature to form a solidified body.

An inorganic substance (zeolite) having a three-dimensional network structure composed of oxygen, silicone and aluminum is used as the inorganic adsorbent. Four zeolites differing in the pore size were tested with respect to oil-adsorbing properties. The results of the measurement of the adsorption of a silicone oil are shown in Table 1. From the results shown in Table 1, it is seen that an adsorbent having a larger pore diameter has a larger oil adsorption. The reason is that since the molecule diameter of the silicone oil is large and 0.9 to 1.3 nm, the oil adsorption is reduced in an adsorbent having a small
pore size. Incidentally, since molecule diameters
of other organic waste liquids are about 1 nm , the
oil adsorption can be increased by using adsorbent
having a pore size close to 1 nm .

Table 1

| Zeolite | Pore size (nm) | Oil Adsorption (cc/g) |
|---------|----------------|-----------------------|
| A       | 0.3            | 1                     |
| B       | 0.5            | 2                     |
| C       | 1              | 4                     |
| D       | 1              | 5                     |

Furthermore, if an inorganic adsorbent having
a large specific surface area is used, the oil adsorption can be increased.

Accordingly, a granular adsorbent comprising
silicic anhydride as the main component is preferred.

As the inorganic solidifying agent, there can
be used a cement glass composed mainly of sodium
silicate and a cement composed mainly of calcium
silicate.

The radioactive organic liquid waste is adsorbed
in the inorganic adsorbent and the inorganic adsorbent is covered with the inorganic solidifying agent. Accordingly, migration of the radioactive substance is hardly observed, and the resulting solidified body is excellent in the stability.

An embodiment in which a radioactive organic liquid waste discharged from a nuclear power plant is adsorbed in an adsorbent and is then solidified in a drum having a capacity of 200 liters will now be described. In this embodiment, a lubricating oil used for a compressor is used as the organic liquid waste and a zeolite which is an inorganic adsorbent composed mainly of special calcium silicate in the form of a granular powder having a particle size of 2 to 3 mm (zeolite D shown in Table 1) is used as the adsorbent.

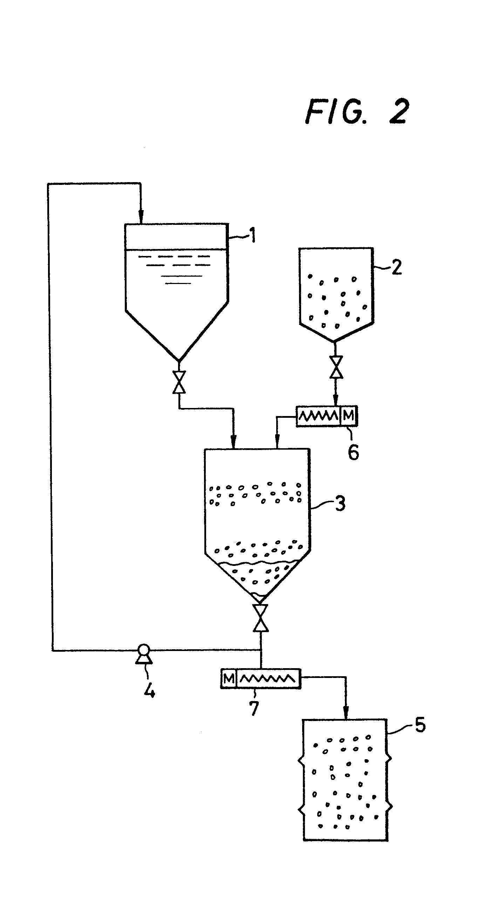

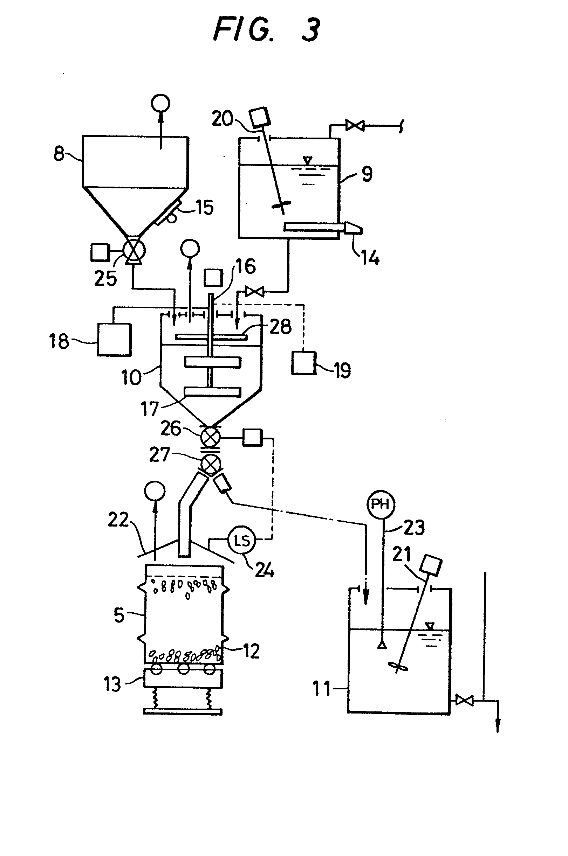

Fig. 2 is a systematic diagram illustrating an apparatus for making an organic liquid waste adsorbed in an adsorbent, and Fig. 3 is a systematic diagram illustrating an apparatus for solidifying an adsorbent with a solidifying agent.

Referring to Fig. 1, a predetermined amount of an adsorbent is supplied from an adsorbent tank 2 to an oil adsorption tank 3 by a delivering device 6. The delivering device 6 has a screw feeder in the interior thereof, and the screw feeder is rotated by a motor to deliver the adsorbent. Then, an organic liquid is supplied from a liquid waste tank 1 so that the adsorbent is impregnated with the organic liquid, whereby the organic liquid is adsorbed in the adsorbent. After the organic liquid is saturatedly adsorbed in the adsorbent, the organic liquid in the oil adsorption tank is returned to the waste liquid tank 1 by a pump 4. The amount of the adsorbed organic liquid is about 2.3 times the unit weight of the adsorbent. The adsorbent having the organic liquid adsorbed therein is packed into a drum (solidifying vessel) 5 by a delivering device 7. A solidifying agent is injected into the drum 5 in the following manner.

Referring to Fig. 3, about 90 kg of a cement glass composed mainly of sodium silicate is supplied to a kneading tank 10 from a solidifier tank 8. Then, about 35 kg of water is supplied to the kneading tank 10 from an additive water tank 9. Standard paddle vanes 17 are attached to the kneading tank 10. The solidifying agent is mixed with water in the kneading tank 10. A stirrer is driver at 100 to 150 rpm, and a kneaded mixture of the solidifying agent and water, that is, a so-called paste, is prepared within about 10 minutes. The drum 5 packed with about 130 kg of the adsorbent 12 having the organic liquid adsorbed therein is placed below a hood 22. The adsorbent is packed in the drum 5 in the closest manner by a vibrator 13. A changeover valve 27 is opened toward the drum 5, and an injection valve 26 is gradually opened to inject the paste into the drum 5. If the speed of injection of the paste is too high, air is introduced into spaces among particles of the adsorbent 12 and the strength of the solidified body is reduced. Accordingly, the injection speed is controlled by adjusting the opening degree of the injection valve 26. It is preferred that the injection speed be 5 to 8 kg/min. If the injection speed is adjusted to 6 kg/min, the paste is injected in 20 minutes. If the subsequent kneading operation is carried out in a state where the paste is left, the paste is solidified, with the result that it becomes impossible to open and close the injection valve 26 and the like. Therefore, a washing operation is carried out. A nozzle 28 connected to a compressed water tank 18 is arranged in the kneading tank 10, and the nozzle 28 is moved in the vertical direction and circumferential direction by a device 19 for controlling the vertical movement of the nozzle. The changeover valve 27 is opened toward a washing water discharge tank 11, and water is fed under a pressure of about 10 bar    to the

nozzle 28 from a compressed water tank 18.  Water is sprayed on the wall surface of the kneading tank 10 from the nozzle 28, whereby the adhering paste is removed.

The cement glass is water-hardenable, so that it is hardened by reaction with water to form a solidified body.  The compression strength of the solidified body is as high as about $1177N/cm^2$.

The organic liquid waste having a radioactivity is adsorbed in the adsorbent and the periphery of the adsorbent is covered with the cement glass.

Accordingly, leaching of the radioactive substance is hardly observed.

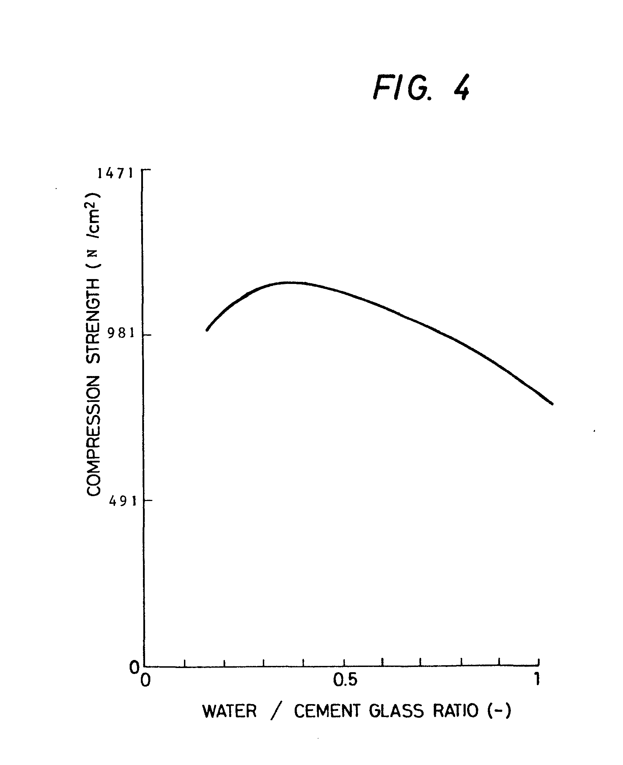

Fig. 4 shows the results of the measurement of the compression strengths of solidified bodies obtained at various mixing ratios between water and the cement glass.  From Fig. 4, it is seen that the compression strength is highest when the water/cement glass ratio is 0.35, and from the practical viewpoint, it is preferred that the water/cement glass ratio be in the range of from 0.2 to 0.6.

Another embodiment of the present invention will be described.

A silicone oil used as the heating medium is used as the radioactive organic liquid waste, and a solidified body is formed with the cement glass in the same manner as described in the foregoing embodiment. The amount of the silicone oil adsorbed in the adsorbent is about 2.4 times the unit weight of the adsorbent. The compression strength of the solidified body is higher when the water/cement glass ratio is 0.4 and this highest compression strength is $785N/cm^2$.

As is apparent from the foregoing description, a strong solidified body can be obtained also when a silicone oil is used.

Still another embodiment of the present invention will now be described.

A cement glass-solidified body is prepared in the same manner as described in the foregoing embodiment by using carbon tetrachloride which is an organic solvent used for the chemical analysis. The amount of carbon tetrachloride adsorbed in the adsorbent is about 1.7 times the unit weight of the adsorbent. The compression strength of the solidified body is highest when the water/cement glasss ratio is 0.5, and this highest compression strength is $687N/cm^2$.

From the foregoing description, it is seen that a stable solidified body can also be obtained when an organic solvent is used.

In the foregoing embodiments, the cement glass composed mainly of sodium silicate is used as the solidifying agent. However, solidified bodies having a high strength can be similarly obtained when such inorganic solidifying agents as blast furnace cement and Portland cement are used.

According to the present invention, an organic liquid waste is fixed to the inorganic adsorbent and is further covered with the inorganic solidifying agent, and therefore, the above-mentioned defects of the conventional techniques can be eliminated and a good solidified body excellent in the long-period storage stability can be obtained. Accordingly, a great advantage can be attained with respect to the long-period storage. The present invention is especially effective for stably solidifying difficultly combustible organic liquid wastes such as silicone oils and organic solvents and organic liquid wastes contaminated with radioactive substances.

0190638

What Is Claimed Is

1. A method for solidifying organic liquid wastes, which comprises making an organic liquid waste adsorbed or absorbed in a porous inorganic substance and solidifying the porous inorganic substance with an inorganic solidifying agent.

2. A method for solidifying organic liquid wastes according to claim 1, wherein the organic liquid waste is a difficultly combustible organic liquid.

3. A method for stabilizing organic liquid wastes according to claim 1, wherein the organic liquid waste is an organic liquid waste contaminated with a radioactive substance.

4. A method for stabilizing organic liquid wastes according to claim 1, wherein the porous inorganic substance is a granular adsorbent composed mainly of silicic anhydride.

5. A method for solidifying organic liquid wastes according to claim 1, wherein the inorganic solidifying agent is a cement glass composed mainly of sodium silicate.

6. A method for solidifying organic liquid wastes according to claim 4, wherein the organic liquid waste is a silicone oil and the porous inorganic substance is a zeolite having a pore size of at least 1 nm .

7. A method for solidifying organic liquid wastes according to claim 3, wherein the organic liquid waste is a lubricating oil and the porous inorganic substance is a granular powder having a particle size of 2 to 3 mm, which consists of a zeolite composed mainly of special calcium silicate.

8. A method for solidifying organic liquid wastes according to claim 5, wherein the cement glass is mixed with water at a water/cement glass mixing ratio of from 0.2 to 0.6.

9. A method for solidifying organic liquid wastes according to claim 6, wherein the inorganic solidifying agent is a cement glass composed mainly of sodium silicate and the cement glass is mixed with water at a water/cement glass mixing ratio of about 0.4.

10. A method for solidifying organic liquid wastes according to claim 4, wherein the organic liquid waste is an organic solvent, the inorganic solidifying agent is a cement glass composed mainly of sodium silicate, and the cement glass is mixed with water at a water/cement glass mixing ratio of about 0.5.

11.  A method for solidifying organic liquid wastes, which comprises making a difficultly combustible organic liquid waste contaminated with a radioactive substance, adsorbed or absorbed in a porous inorganic substance, and solidifying the porous inorganic substance with an inorganic solidifying agent.

12.  A method for solidifying organic liquid wastes according to claim 12, wherein the inorganic solidifying agent is a cement glass composed mainly of sodium silicate and the water glass is mixed with water at a water/cement glass mixing ratio of from 0.2 to 0.6.

13.  A method for solidifying organic liquid wastes according to claim 12, wherein the porous inorganic substance is a granular adsorbent composed mainly of silicic anhydride.

14.  A method for solidifying organic liquid wastes according to claim 14, wherein the organic liquid waste is a silicone oil or an organic solvent.

15.  A method for solidifying organic wastes, which comprises making a difficultly combustible organic liquid waste adsorbed or absorbed in a porous inorganic substance, charging the porous inorganic

- 4 -

0190638

substance in a solidifying vessel/ and injecting a
$(5)$
paste formed by kneading an inorganic solidifying
$(5)$
agent with water into the solidifying vessel/to form
a solidified body.

16. A method for solidifying organic liquid
wastes according to claim 15, wherein the inorganic
solidifying agent is a cement glass composed mainly
of sodium silicate and the cement glass is mixed
at a water/cement glass mixing ratio of from 0.2 to
0.6.

17. A method for solidifying organic liquid
wastes according to claim 16, wherein the porous
inorganic substance is a granular adsorbent composed
mainly of silicic anhydride.

18. A method for solidifying organic liquid
wastes according to claim 17, wherein the organic
liquid waste is a silicone oil or an organic solvent.

19. A method for solidifying liquid wastes,
which comprises making a liquid waste adsorbed or
absorbed in a porous substance and solidifying the
porous substance having the liquid waste adsorbed
or absorbed therein with a solidifying agent.

## FIG. 1

```
┌──────────────┐        ┌──────────────┐                    ┌──────────┐    ┌────────┐
│ SILICONE OIL,│        │              │                    │ KNEADING │───▶│ AGING  │
│ ORGANIC      │───────▶│  ABSORBENT   │───────────────────▶│          │    │        │
│ SOLVENTS,    │        │              │                    └──────────┘    └────────┘
│ ETC.         │        └──────────────┘                          ▲
└──────────────┘                                                  │
                                                                  │
┌──────────────┐                                                  │
│ INORGANIC    │                          ┌──────────┐            │
│ SOLIDIFYING  │─────────────────────────▶│ KNEADING │───────────┘
│ MATERIAL     │                          │          │
└──────────────┘                          └──────────┘
                                                ▲
┌──────────────┐                                │
│    WATER     │────────────────────────────────┘
└──────────────┘
```

0190638

FIG. 2

0190638

## FIG. 3

4/4

0190638

FIG. 4

**European Patent Office**

**EUROPEAN SEARCH REPORT**

Application number

EP 86 10 1059

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-2 228 938 (NUKEM) <br><br> * Claims 1,4,6; page 5, lines 9,10 * | | G 21 F 9/16 |
| A | US-A-4 028 265 (BARNEY) <br><br> * Claim 1; column 5, lines 40-42 * | 1,3-5,7 | |
| A | FR-A-2 291 583 (ATOMENERGI) <br> * Claim 1; page 3, lines 25-29 * | 1,4,6 | |
| A | FR-A-2 242 752 (BAYER) <br> * Claim 1; page 4, lines 34-37 * | 1,4,6 | |
| A | EP-A-0 077 978 (REAKTOR-BRENNELEMENT) <br> * Claims 1,4 * | 1,5,7 | **TECHNICAL FIELDS SEARCHED (Int Cl 4)** <br><br> G 21 F |

The present search report has been drawn up for all claims

| Place of search | Date of completion of the search | Examiner |
|---|---|---|
| THE HAGUE | 10-04-1986 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82